# EUROPÄISCHE PATENTSCHRIFT

(11) **EP 0 895 893 B1**
(45) Veröffentlichungstag und Bekanntmachung des Hinweises auf die Patenterteilung: **15.11.2000**
(21) Anmeldenummer: 98114843.0
(22) Anmeldetag: 07.08.1998
(51) Int. Cl.: B60M 1/18

(54) **Vorrichtung zum mechanischen Verbinden und elektrischen Isolieren zweier Fahrdrahtabschnitte einer Oberleitung**
Device for mechanically connecting and electrically insulating two sections of catenary wires
Dispositif pour la connexion mécanique et l' isolation électrique de deux sections de fil de contact

(30) Priorität: 08.08.1997 DE 19734309
(43) Veröffentlichungstag der Anmeldung: 10.02.1999
(73) Patentinhaber: Richard Bergner GmbH & Co, 91126 Schwabach (DE)
(72) Erfinder: Damm, Peter, 01640 Coswig (DE)
(74) Vertreter: Tergau & Pohl Patentanwälte

(56) Entgegenhaltungen:
- EP-A- 0 059 845
- FR-A- 1 391 117
- US-A- 4 424 889

## Beschreibung

Die Erfindung betrifft eine Vorrichtung zum mechanischen Verbinden und elektrischen Isolieren zweier Fahrdrahtabschnitte einer Oberleitung mit den Merkmalen des Oberbegriffs des Anspruches 1.

Derartige Vorrichtungen sind aus DE 29 36 822 A1 sowie aus DE 30 27 406 A1 bekannt. Dort weist die - kurz auch als "Streckentrenner" bezeichnete - Vorrichtung zwei parallel zueinander angeordnete Stabisolatoren auf, mit deren Hilfe die beiden Fahrdrahtenden zugfest miteinander verbunden werden sollen. Zu diesem Zweck enthalten die axialen Isolatorfreienden der Stabisolatoren jeweils ein Innengewinde, welche mit Schraubbolzen zusammenwirken. Durch die Schraubbolzen ist der Stabisolator im Montagezustand von einer in Richtung seiner Mittellängsachse bzw. der Axialrichtung verlaufenden Klemmkraft beaufschlagt und hierdurch lagegesichert. Zur Lagesicherung der Stabisolatoren gegenüber einem Fahrdrahtabschnitt sind jedoch zusätzliche, mit den Schraubbolzen zusammenwirkende Spannmittel, Klemmbacken und Traversen, welche teilweise über den Fahrdrahtabschnitt seitlich flankierende Kufen mit dem Fahrdrahtabschnitt fest verbunden sind, erforderlich. Die Vielzahl der erforderlichen Verbindungsmittel zieht eine umständliche Montage der Stabisolatoren und der übrigen Bauteile der Vorrichtung nach sich. Ebenso umständlich ist die Demontage einzelner Bauteile der Vorrichtung bei einem erforderlichen Austausch eines Bauteiles, z.B. nach einer Beschädigung oder übergroßem Materialverschleiß. Die Anordnung und Ausgestaltung der Verbindungsmittel wirkt sich außerdem nachteilig auf die Kraftübertragung zwischen Fahrdraht und Stabisolator aus. Dadurch wächst die Gefahr von unerwünschten Lageänderungen und Durchbiegungen des Stabisolators, wodurch die erforderliche zugfeste Verbindung zwischen den Fahrdrahtabschnitten und den Stabisolatoren beeinträchtigt ist.

Der Erfindung liegt die Aufgabe zugrunde, die Montage und Handhabung einer Vorrichtung der eingangs genannten Art zu vereinfachen.

Diese Aufgabe wird durch die Merkmalskombination des Anspruches 1 gelöst.

Erfindungsgemäß ist zwischen den am Fahrdraht - unmittelbar oder mittelbar - befestigten Verbindungsmitteln und dem Stabisolator eine in Axialrichtung des Stabisolators wirksame Formschlußverbindung vorgesehen. Diese Formschlußverbindung ermöglicht eine in Axialrichtung arretierte bzw. unbewegliche (abgesehen von einem für die Montage notwendigen und auch fertigungsbedingten geringen Bewegungsspiel) Lagerung des Stabisolators am Verbindungsmittel. Weiterhin ist die Formschlußverbindung in Umfangsrichtung relativbeweglich, wobei quer zur Axialrichtung verstellbare Mittel zur lösbaren Verdrehsicherung dieser Relativbeweglichkeit vorgesehen sind. Auf diese Weise ist der Stabisolator in Umfangsrichtung am Verbindungsmittel bei nicht wirksamen Verdrehsicherungs-Mitteln drehbar gelagert und aufgrund der Formschlußverbindung gleichzeitig in Axialrichtung lagegesichert. Im Montageendzustand des Stabisolators ist seine Drehbarkeit durch die Verdrehsicherungs-Mittel aufgehoben. Hierzu wird mit Hilfe der Verdrehsicherungs-Mittel insbesondere eine quer zur Axialrichtung verstellbare Klemmkraft auf den Stabisolator ausgeübt. Vorzugsweise ist die Formschlußverbindung durch ein bestimmtes Verstellen der Verdrehsicherungs-Mittel lösbar ausgebildet.

Die Erfindung schafft eine montagetechnisch einfache, zeitsparende und gleichzeitig betriebstechnisch besonders sichere Handhabung des Stabisolators zur Veränderung seiner Drehlage. Der Erfindung liegt die Erkenntnis zugrunde, daß bei einem durch das Gleitstück eines Stromabnehmerbügels - nachfolgend kurz: "Stromabnehmer" - beschleifbaren Stabisolator dessen Lebensdauer erheblich verlängert wird, wenn seine Drehlage im Laufe der Betriebszeit veränderbar ist.

Auf diese Weise können zeitaufwendige Demontagen der Vorrichtung zum Austausch eines Stabisolators für eine längere Betriebszeit verzichtet werden kann.

Zur Veränderung der Drehlage muß ausgehend vom Montageendzustand des Stabisolators lediglich die Verdrehsicherung gelöst werden, was jedoch die Formschlußverbindung nicht beeinträchtigt und der Stabisolator somit in Axialrichtung weiterhin lagegesichert bleibt. Nach Einstellung der erwünschten Drehlage des Stabisolators müssen wiederum nur die Verdrehsicherungs-Mittel betätigt werden, um den Stabisolator erneut in seinen Montageendzustand zu überführen.

Montagetechnisch einfach wird auf diese Weise ein gleichmäßiger Verschleiß des Außenmantels bzw. des Isoliermantels des Stabisolators im Laufe der Betriebszeit erzielt. Der Stromabnehmer eines elektrisch betriebenen Fahrzeuges gleitet an diesem Isoliermantel entlang und trägt deshalb im Laufe der Betriebszeit einen Umfangsabschnitt des Isoliermantels ab. Um hier einen übergroßen Materialverschleiß eines bestimmten Umfangsabschnittes des Isoliermantels oder ein Freilegen eines vom Isoliermantel umhüllten Isolierstabes zu verhindern, wird der Stabisolator in der vorbeschriebenen Weise einfach verdreht. Auf diese Weise kann der Stromabnehmer im Laufe der Betriebszeit nacheinander über mehrere, z.B. fünf Umfangsabschnitte des Isolatormantels hinweggleiten, bevor der Stabisolator durch einen neuen Stabisolator ausgetauscht werden muß. Folglich steigt auch die Lebensdauer des Stabisolators um ein Mehrfaches, z.B. um das Fünffache an.

Das Zusammenwirken von Stabisolator und Verbindungsmittel ermöglicht außerdem eine einfache und fachgerechte Montage des Stabisolators, da die Formschlußverbindung als Fixierhilfe für die Lagerung des Stabisolators wirksam ist und Fehlmontagen ausschließt.

Die Formschlußverbindung und die dazugehörigen Verdrehsicherungs-Mittel sind insbesondere an beiden Axialenden des Stabisolators vorgesehen, so daß beide Fahrdrahtabschnitte mit dem Stabisolator gleichmäßig zugfest verbunden sind.

Vorzugsweise ist der Stabisolator bei nicht wirksamen Verdrehsicherungs-Mitteln bezüglich seiner Längsachse um 360° drehbar.

Nach Anspruch 2 weist der Stabisolator mindestens einen axialen Kopplungsabschnitt mit mindestens einer Kopplungsnut und/oder mindestens einem Kopplungsnocken an seinem Umfangsmantel auf. Mehrere in Axialrichtung voneinander beabstandete Kopplungsnuten und/oder Kopplungsnocken verbessern die Lagesicherheit des Stabisolators in Axialrichtung. Auch bei Beschädigung einer einzelnen Kopplungsnut oder eines einzelnen Kopplungsnockens ist die Betriebssicherheit der Formschlußverbindung gewährleistet. Außerdem unterstützen mehrere in Axialrichtung hintereinander gereihte Kopplungsnuten und/oder Kopplungsnocken das Aufnehmen von besonders großen Zugkräften durch den Stabisolator. Darüber hinaus verhindern die mehrfach vorgesehenen Kopplungsnuten und/oder Kopplungsnocken wirksam ein eventuelles Verkanten der Formschlußverbindung, wenn die Verdrehsicherung der Formschlußverbindung gelöst wird. Alternativ kann das Verbindungsmittel und/oder der Stabisolator vor dem Lösen der Verdrehsicherung von einer geeigneten Hilfsvorrichtung abgestützt werden, um ein Verkanten der Formschlußverbindung zuverlässig zu verhindern.

Gemäß Anspruch 3 ist der Kopplungsnocken bzw. die Kopplungsnut des Kopplungsabschnittes in Umfangsrichtung des Stabisolators in sich geschlossen ausgestaltet und bildet hierdurch eine Ringrippe bzw. eine Ringnut. Die in sich geschlossene Ringrippe bzw. Ringnut unterstüzt die Stabilität der Formschlußverbindung und bewirkt eine verbesserte Führung des Kopplungsabschnittes und des Stabisolators bei dessen Drehen um seine Mittellängsachse bei gelöster Verdrehsicherung.

Mit der Maßnahme gemäß Anspruch 4 läßt sich die vom Stabisolator aufzunehmende Zugkraft stufenweise in den Kopplungsabschnitt einleiten. Außerdem ermöglichen mehrere Ringrippen mit unterschiedlichen Querschnitten bzw. Durchmessern eine höhere Sicherheit bei der formschlüssigen Fixierung des Kopplungsabschnittes durch die Verbindungsmittel. Ist beispielsweise der der größten Ringrippe zugeordnete tragende Querschnitt der Verbindungsmittel alleine nicht dazu geeignet, den Stabisolator mechanisch stabil zu tragen, so wird dieser tragende Querschnitt der Verbindungsmittel durch zusätzliche stärkere, den kleineren Ringrippen zugeordnete Querschnittsabschnitte der Verbindungsmittel, z. B. Klemmbacken, unterstützt.

Gemäß Anspruch 5 weist die Ringrippe eine materialsparende Verstärkung zur Aufnahme von Zugkräften auf.

Anspruch 6 ermöglicht eine behinderungsfreie und platzsparende Montage des Stabisolators und der Vorrichtung.

Gemäß Anspruch 7 wird eine feste Verbindung des Kopplungsabschnittes mit einem den Kern des Stabisolators bildenden Isolierstab erzielt. Zur Befestigung wird das axiale Isolierstabende einfach in die Aufnahmehülse eingeschoben und die Aufnahmehülse wird durch Aufpressen, Verkleben o.dgl. mit dem Isolierstab unverlierbar verbunden.

Um das Einführen des Isolierstabendes fertigungstechnisch einfach zu gestalten, weist der Aufnahmeraum der Aufnahmehülse nach Anspruch 8 einen in Richtung der Aufnahmeöffnung mündenden und trichterartig aufgeweiteten Einführabschnitt auf. Außerdem ist dieser trichterartige Einführabschnitt in der Lage, zusätzlich den axialen Endbereich eines den Isolierstab umhüllenden Isoliermantels dicht zu umgeben. Auf diese Weise werden umhüllungsfreie Zonen des Isolierstabes zuverlässig vermieden und eine zusätzliche Abdichtung des Aufnahmeraumes für das Isolierstabende erzielt. Der Isolierstab ist deshalb vor äußeren Einflüssen, wie z.B. Eindringen von Feuchtigkeit, verbessert geschützt. Hierdurch wird die nutzbare Lebensdauer des Stabisolators verlängert.

Nach Anspruch 9 erstreckt sich der am Kopplungsabschnitt angeordnete Kopplungsnocken oder die am Kopplungsabschnitt angeordnete Ringrippe quer zur Axialrichtung höchstens bis zum Außendurchmesser der Aufnahmehülse. Das Kopplungsglied läßt sich in diesem Fall besonders einfach aus einem einzigen Werkstück herstellen, was die Eigenstabilität des Kopplungsgliedes unterstützt.

Gemäß Anspruch 10 läßt sich der Kopplungsabschnitt und/oder die Aufnahmehülse fertigungstechnisch einfach aus einem als Rundstab oder Mehrkantstab ausgebildeten Rohling herstellen. Derartige Stabprofile sind als Massenware kostengünstig erhältlich. Die Kopplungsnocken bzw. die Ringrippen können dann nachträglich in einen Axialabschnitt des Rohlings eingearbeitet werden. Beispielsweise wird das Kopplungsglied aus einem zylindrischen Rohling hergestellt, dessen Durchmesser dem Außendurchmesser der Aufnahmehülse entspricht. Die Kopplungsnocken bzw. die Ringrippen können dann nachträglich in einen Axialabschnitt des Rohlings mit einem gegenüber der Aufnahmehülse gleichem oder verringerten Durchmesser eingearbeitet werden. Eine rotationssymmetrische Ausbildung des Kopplungsabschnittes ermöglicht eine besonders einfache Drehbarkeit des Stabisolators um 360°. Eine Drehbarkeit des Stabisolators bei nicht wirksamen Verdrehsicherungs-Mitteln ist jedoch selbstverständlich auch bei einem polygonförmigen Querschnitt des Kopplungsabschnittes gewährleistet.

Ein polygonförmiger Querschnitt des Kopplungsgliedes bzw. der durch den Stromabnehmer zu beschleifenden Aufnahmehülse reduziert vorteilhaft die üblicherweise vorhandene Exzentrizität zwischen dem Fahrdrahtabschnitt und dem Stabisolator. Aufgrund der unterschiedlichen Werkstoffeigenschaften zwischen Fahrdraht und Stabisolator weist der Stabisolator zum Aufnehmen der Zugkräfte nämlich üblicherweise einen größeren Querschnitt als der Fahrdraht auf. Da außerdem die dem Stromabnehmer zugewandten Oberflächenbereiche von Fahrdraht und Stabisolator in Fahrdrahtlängsrichtung möglichst fluchten und in einer Ebene einliegen sollen, entsteht automatisch ein axialer Versatz zwischen den Mittellängsachsen des Fahrdrahtes und des Stabisolators. Hierdurch entstehen unerwünschte, auf den Stabisolator einwirkende Biegemomente. Ein Stabisolator mit polygonförmigem, z. B. sechskantförmigem Querschnitt kann nun gegenüber einem kreisrunden Stabisolator, dessen Durchmesser dem Außendurchmesser des Polygons entspricht, tiefer montiert werden, so daß der Versatz zwischen den Mittellängsachsen von Fahrdraht und Stabisolator reduziert ist. Ein polygonförmiger Querschnitt der Aufnahmehülse bzw. des Stabisolators reduziert also die vorgenannten Biegemomente.

Die mechanische Stabilität der kraftschlüssigen Kopplung des Stabisolators mit den Verbindungsmitteln wird durch ein metallisches Kopplungsglied unterstützt. Das Kopplungsglied ist z.B. aus Kupfer, einer Kupferlegierung oder Edelstahl hergestellt.

Vorzugsweise handelt es sich bei den Verdrehsicherungs-Mitteln um eine Spannschraube oder mehrere in Axialrichtung aneinandergereihte Spannschrauben, welche die Spannkraft erzeugen (Anspruch 12). Gemäß den Ansprüchen 11 und 12 ausgestaltete Verbindungsmittel und Verdrehsicherungs-Mittel unterstützen eine mechanisch stabile Drehlagerung des Stabisolators bei nicht angezogenen Spannschrauben. Darüber hinaus ermöglichen die Spannschrauben eine kostengünstige und montagetechnisch einfach handhabbare Verdrehsicherung des Stabisolators.

Um besonders große Zugkräfte aufnehmen zu können, kann die Vorrichtung mehrere parallele Stabisolatoren, welche gleichermaßen mit einem Fahrdrahtabschnitt gekoppelt sind, enthalten. Werden zwei nebeneinander angeordnete Stabisolatoren eingesetzt, wird eine konstruktiv und montagetechnisch einfache kraftschlüssige Verbindung der Stabisolatoren mit dem Fahrdrahtabschnitt dadurch erzielt, daß die den Stabisolator formschlüssig umfassenden Klemmbacken in einer zusätzlichen Funktion auch zur Fixierung des Fahrdrahtabschnittes herangezogen werden (Anspruch 13). Mit den Klemmenverlängerungen wird zwischen dem Ende eines Fahrdrahtabschnittes und den Stabisolatoren ein besonders kurzer Übertragungsweg zur Einleitung der Zugkräfte in die Stabisolatoren geschaffen. Dies unterstützt eine mechanisch stabile Kopplung der Stabisolatoren an den zugehörigen Fahrdrahtabschnitt und reduziert vorteilhaft die zwischen Stabisolatoren und Fahrdrahtabschnitt wirksamen Biegemomente.

Die Maßnahme nach Anspruch 14 schafft eine kostengünstige und montagetechnisch einfache stabile Fixierung des Fahrdrahtabschnittes an den Klemmenverlängerungen mittels einer oder mehrerer Klemmschrauben.

Anspruch 15 schlägt eine axiale Verstellbarkeit der Klemmenverlängerungen unter Zuglast vor. Hierbei wirkt eine geeignete Verstellvorrichtung mit den beiden Klemmenverlängerungen zusammen, wodurch letztere in einer Lösestellung gegeneinander relativbeweglich sind. Um hierbei die konstruktive Ausgestaltung der Klemmenverlängerungen einfach zu halten, können zur Erzeugung der Klemmkraft weiterhin die im Anspruch 14 genannten Klemmschrauben verwendet werden, welche entsprechende Langlöcher der Klemmenverlängerungen durchgreifen. Die Axialverstellbarkeit der beiden jeweils einem Stabisolator zugeordneten Klemmenverlängerungen ermöglicht bei bereits vorhandenen Verbindungsmitteln eine Längenanpassung von parallelen Stabisolatoren aneinander, wenn diese - z.B. fertigungsbedingt - nicht gleich lang sind oder wenn ein auszutauschender Stabisolator nicht die gleiche Länge aufweist wie der Ersatz-Stabisolator. Dabei ist die Länge des kürzeren zweier paralleler Stabisolatoren die Bezugsgröße. Die dem längeren Stabisolator zugeordnete Klemmenverlängerung wird entsprechend axial verschoben und dann mit der anderen Klemmenverlängerung verspannt.

Alternativ zur Axialverstellbarkeit der Verbindungsmittel kann eine exakte Längenanpassung paralleler Stabisolatoren aneinander bei bereits vormontierten Verbindungsmitteln dadurch erzielt werden, daß ein Axialende des Stabisolators nachträglich bearbeitet wird, um die Länge des Stabisolators an einen vorbestimmten Axialabstand zwischen den den beiden Axialenden des Stabisolators zugeordneten Verbindungsmitteln anzupassen. Hierzu wird beispielsweise ein bereits vorgefertigter Kopplungsabschnitt an einem Axialende des Stabisolators fixiert. Ein noch in seinem Rohzustand befindliches Kopplungsglied wird mit seiner Aufnahmehülse auf das zweite Isolierstabende aufgepresst. Dieser Kopplungsabschnitt wird dann nachbearbeitet, indem der Kopplungsnocken, die Ringrippe, Kopplungsnut oder Ringnut während dieser Nachbearbeitung axial derart positioniert wird, daß der Stabisolator formschlüssig mit den bereits axial positionierten Verbindungsmitteln zusammenwirken kann. Auf diese Weise können fertigungsbedingte Längentoleranzen bei der Herstellung der Stabisolatoren ausgeglichen und mehrere Stabisolatoren bei der Montage exakt parallel ausgerichtet werden. Ersatz-Stabisolatoren können vor der Montage an die Länge des ausgetauschten Stabisolators angepaßt werden.

Gemäß Anspruch 16 trägt der Stabisolator zumindest mit einem axial mittleren Stabisolatorabschnitt dazu bei, daß ruckartige Änderungen des Höhenniveaus des Stromabnehmers vermieden werden. Auch die Axialenden des Stabisolators bzw. dessen Kopplungsglieder oder Aufnahmehülsen sind vom Stromabnehmer gegebenenfalls beschleifbar, so daß auch die Axialenden des Stabisolators ein gleichmäßiges Höhenniveau des Stromabnehmers unterstützen können.

Der Erfindungsgegenstand wird anhand der in den Figuren dargestellten Ausführungsbeispiele näher erläutert. Es zeigen:
- Fig. 1: eine Seitenansicht der erfindungsgemäßen Vorrichtung in einer ersten Ausführungsform,
- Fig. 2: die Ansicht der Vorrichtung gemäß Pfeilrichtung II in Fig. 1,
- Fig. 3: eine vergrößerte Detaildarstellung der Vorrichtung gemäß Schnittlinie III-III in Fig. 1,
- Fig. 4: eine teilweise geschnittene Seitenansicht des Stabisolators,
- Fig. 5: eine Seitenansicht des Kopplungsgliedes in der Ausführungsform gemäß Fig. 4,
- Fig. 6: die Seitenansicht des Kopplungsgliedes in einer zweiten Ausführungsform,
- Fig. 7: eine vergrößerte und teilweise geschnittene Darstellung etwa des Details VII in Fig. 2,
- Fig. 8: eine ungeschnittene Seitenansicht gemäß Pfeilrichtung VIII in Fig. 7,
- Fig. 9: eine Vorderansicht gemäß Schnittlinie IX-IX in Fig. 8,
- Fig. 10: eine ausschnittsweise Draufsicht auf die Vorrichtung entsprechend etwa des Details VII in Fig. 2, jedoch in einer weiteren Ausführungsform, welche an zwei parallele Fahrdrahtabschnitte angepaßt ist,
- Fig. 11: die Seitenansicht gemäß Pfeilrichtung XI in Fig. 10,
- Fig. 12: eine geschnittene Vorderansicht gemäß Schnittlinie XII-XII in Fig. 10.

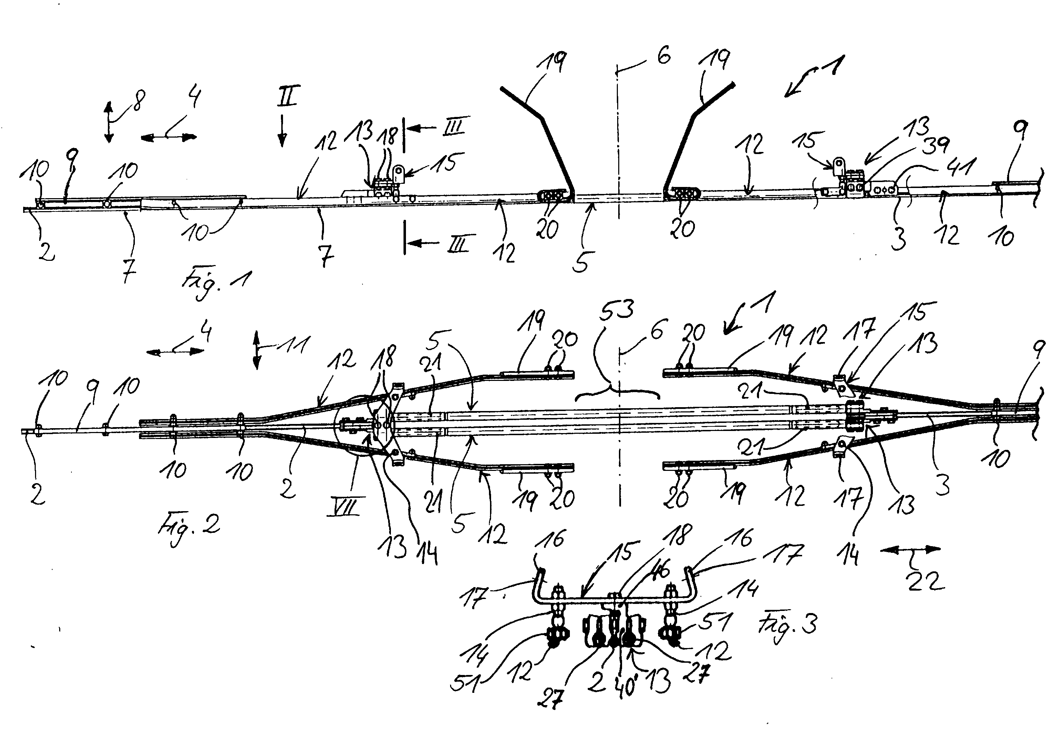

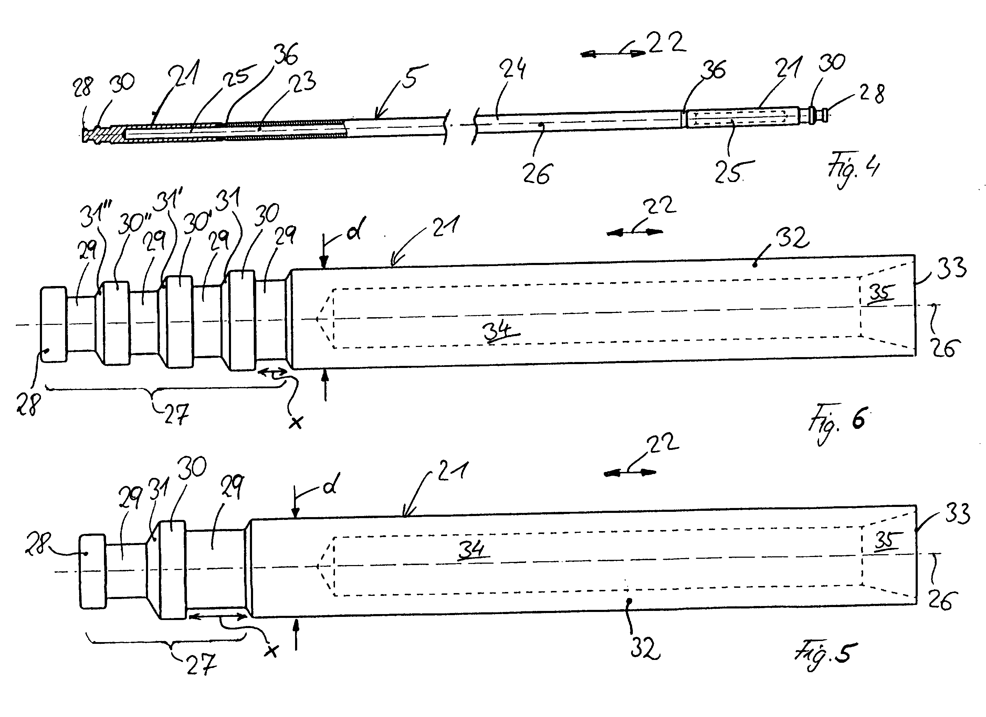

Die in Fig. 1 und Fig. 2 dargestellte Vorrichtung 1 - auch als "Streckentrenner" bezeichnet - verbindet zwei Fahrdrahtabschnitte 2,3 einer Oberleitung in Fahrdrahtlängsrichtung 4 zugfest miteinander. Gleichzeitig erzielt die Vorrichtung 1 mit Hilfe zweier zwischen den Fahrdrahtabschnitten 2,3 angeordneten und parallel zueinander verlaufenden Stabisolatoren 5 eine elektrische Isolierung der beiden Fahrdrahtabschnite 2,3 voneinander. Die Vorrichtung ist bezüglich einer quer zur Fahrdrahtlängsrichtung 4 angeordneten Symmetrieebene 6 im wesentlichen spiegelsymmetrisch ausgebildet. Die nachfolgende Beschreibung der Vorrichtung 1 beschränkt sich deshalb der Einfachheit halber auf den dem Fahrdrahtabschnitt 2 zugewandten Teil.

Während ein in den Figuren nicht dargestellter Stromabnehmer eines in Fahrdrahtlängsrichtung 4 elektrisch angetriebenen Fahrzeugs die üblicherweise dem Erdboden zugewandte Kontaktseite 7 des Fahrdrahtabschnittes 2 elektrisch kontaktiert, ist der Fahrdrahtabschnitt 2 auf seiner der Kontaktseite 7 in Höhenrichtung 8 gegenüberliegenden Seite von einem Versteifungsfahrdraht 9 umgeben. Der Versteifungsfahrdraht 9 ist durch insgesamt vier in Fahrdrahtlängsrichtung 4 voneinander beabstandete Fixierklemmen 10 mit dem Fahrdrahtabschnitt 2 ortsfest verbunden, so daß der Fahrdrahtabschnitt 2 im Bereich des in Fahrdrahtlängsrichtung 4 äußeren Endes der Vorrichtung 1 zusätzlich versteift ist. Dabei durchsetzen die Schrauben der Fixierklemmen 10 den Versteifungsfahrdraht 9 in einer Querrichtung 11, welche rechtwinklig zur Fahrdrahtlängsrichtung 4 und rechtwinklig zur Höhenrichtung 8 angeordnet ist. Die beiden der Vorrichtung 1 in Fahrdrahtlängsrichtung 4 zugewandten Fixierklemmen 10 durchsetzen gleichzeitig die beiden an dem Versteifungsfahrdraht 9 unmittelbar anliegenden Endabschnitte zweier Kontaktkufen 12. Die beiden Kontaktkufen 12 flankieren den Fahrdrahtabschnitt 2 und die beiden Stabisolatoren 5 beidseitig und dienen in bekannter Weise zur elektrischen Kontaktierung des Stromabnehmers an der Kontaktseite 7, so daß auch beim Beschleifen eines Teiles der Stabisolatoren 5 eine elektrische Kontaktierung des Stromabnehmers mit dem Fahrdrahtabschnitt 2 gegeben ist. Hierzu sind die Kontaktkufen 12 mit dem Fahrdrahtabschnitt 2 über die Fixierklemmen 10 und über noch zu beschreibende Verbindungsmittel 13 galvanisch verbunden. Hingegen ist beim Beschleifen des axial mittleren Isolatorabschnittes 53 keine elektrische Kontaktierung des Stromabnehmers vorhanden.

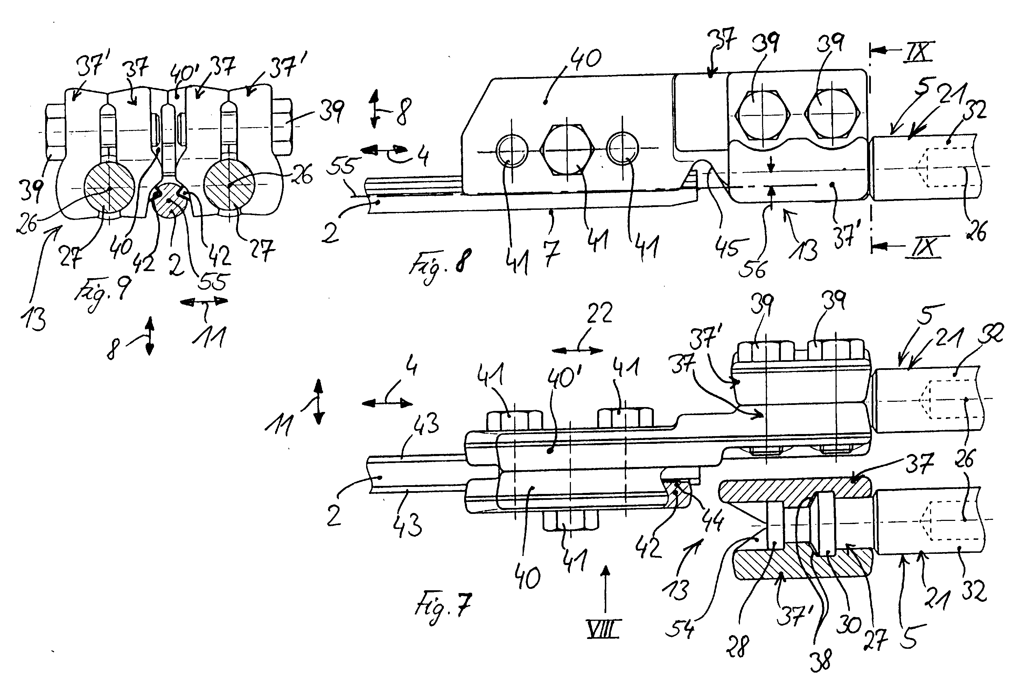

Ein mittlerer, gegenüber der Fahrdrahtlängsrichtung 4 abgewinkelter Kufenabschnitt ist an einem in Höhenrichtung 8 verstellbaren Justierstift 14 fixiert. Der Justierstift 14 wiederum ist an einem Montagebügel 15 verstellbar befestigt (siehe Fig. 3). Der Montagebügel 15 weist zwei abgewinkelte Bügelfreienden 16 auf, welche abweichend von einer exakten Ausrichtung in Höhenrichtung 8 aufeinanderzu gerichtet sind. Die Bügelfreienden 16 sind von jeweils einer Montagebohrung 17 durchsetzt. Diese Montagebohrung 17 dient der Fixierung eines etwa in Höhenrichtung 8 ausgerichteten und hier nicht dargestellten Hängerseiles, welches wiederum an einem ebenfalls nicht dargestellten Tragseil befestigt ist. Da außerdem der Montagebügel 15 über zwei Montageschrauben 18 mit den Verbindungsmitteln 13 fest verbunden ist und die Verbindungsmittel 13 mit dem Längsende des Fahrdrahtabschnittes 2 zugfest verbunden sind, schafft der Montagebügel 15 eine Aufhängung der Vorrichtung 1. Eine Teilmasse der Vorrichtung 1 bzw. der Stabisolatoren 5 wird vom vorgenannten Tragseil abgestützt, so daß die der Kontaktseite 7 zugewandten Oberflächensegmente des Fahrdrahtes 2,3 der Kufen 12 und der Stabisolatoren 5 etwa in einer gemeinsamen Ebene liegen.

Das der Symmetrieebene 6 zugewandte Längsende des mittleren Kufenabschnittes der Kontaktkufe 12 mündet in einen mit Parallalabstand zum Stabisolator 5 verlaufenden äußeren Kufenabschnitt, an dem ein Lichtbogenhom 19 über zwei die Kontaktkufe 12 in Querrichtung 11 durchsetzende Kufenschrauben 20 verschraubt ist. Die Lichtbogenhörner 19 sind insbesondere aus dem Profil des Fahrdrahtes 2,3 hergestellt und dienen in bekannter Weise der Löschung eines die Kufen 12 in Fahrdrahtlängsrichtung 4 überbrückenden Lichtbogens.

Der Stabisolator 5 weist an seinen axial äußeren Enden jeweils ein Kopplungsglied 21 auf. Das Kopplungsglied 21 ist in noch zu beschreibender Weise mit den Verbindungsmitteln 13 formschlüssig verbunden. Diese Formschlußverbindung ist in parallel zur Fahrdrahtlängsrichtung 4 verlaufender Axialrichtung 22 des Stabisolators 5 wirksam. Hierdurch ergibt sich im Montagezustand des Stabisolators 5 eine kraftschlüssige Kopplung zwischen den Fahrdrahtabschnitten 2,3 und dem Stabisolator 5.

Der Stabisolator 5 enthält einen Kern in Form eines Isolierstabes 23. Der Isolierstab 23 besteht aus einem Isolierwerkstoff mit hoher Zugfestigkeit, z.B. glasfaserverstärktes Polyesterharz oder ein anderer geeigneter Werkstoff. Der axial mittlere Bereich des Isolierstabes 23 ist von einem Isoliermantel 24 umhüllt. Dieser Isoliermantel 24 ist aus einem gleitfähigen Kunststoff mit geringem Reibungskoeffizienten und einer verschleißfesten Oberfläche (z.B. PTFE, Teflon etc.) hergestellt. Die axialen Isolierstabenden 25 hingegen sind von jeweils einem Kopplungsglied 21 umgeben. Das Kopplungsglied 21 ist bezüglich der Mittellängsachse 26 des Stabisolators 5 rotationssymmetrisch ausgebildet. Ein axial äußerer Endabschnitt des Kopplungsgliedes 21 bildet einen von den Verbindungsmitteln 13 formschlüssig aufzunehmenden Kopplungsabschnitt 27. Das axiale Freiende des Kopplungsabschnittes 27 wiederum ist durch einen Abschlußflansch 28 gebildet, der über den unmittelbar benachbarten Bereich des Umfangsmantels 29 des Kopplungsabschnittes 27 quer zur Mittellängsachse 26 hinausragt.

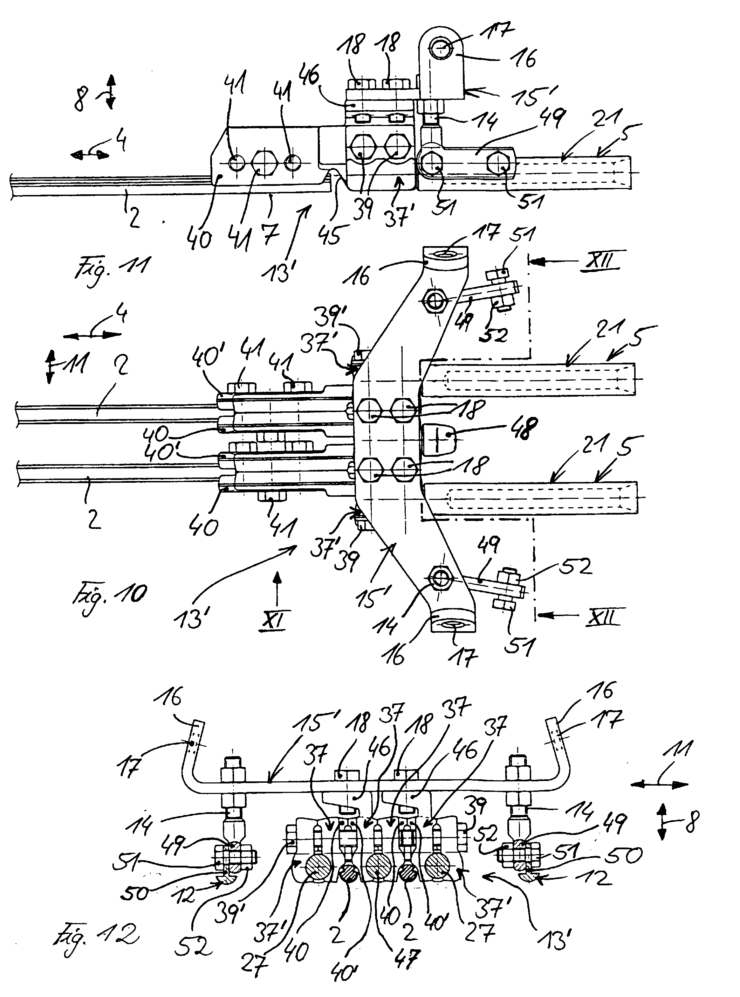

In einer ersten Ausführungsform enthält der Kopplungsabschnitt 27 eine einzige über seinen Umfangsmantel 29 quer zur Mittellängsachse 26 hinausstehende Ringrippe 30 (siehe Fig. 5). Ein an der dem Isolatorfreiende bzw. dem Abschlußflansch 28 axial zugewandten Stirnseite der Ringrippe 30 ist ein Verstärkungsbereich 31 angeformt, der in Richtung des Abschlußflansches 28 kegelstumpfartig verjüngt ist mit der Mittellängsachse 26 als Kegelachse. Die beiderseits der Ringrippe 30 angeordneten Bereiche des Umfangsmantels 29 weisen deshalb einen unterschiedlichen Durchmesser auf. In einer zweiten Ausführungsform trägt der Kopplungsabschnitt 27 insgesamt drei zueinander äquidistant angeordnete Ringrippen 30,30',30" (siehe Fig. 6). Dabei weist die dem Abschlußflansch 28 axial am nächsten angeordnete Ringrippe 30" einen kleineren Durchmesser als die Ringrippe 30' auf. Die Ringrippe 30' wiederum weist einen kleineren Durchmesser als die Ringrippe 30 auf. Auch bei dieser Ausführungsform des Kopplungsgliedes 21 sind die dem Abschlußflansch 28 axial zugewandten Verstärkungsbereiche 31,31',31" in Richtung des Abschlußflansches 28 kegelstumpfartig verjüngt.

Das Kopplungsglied 21 weist eine dem Kopplungsabschnitt 27 axial benachbarte und mit diesem einstückig verbundene Aufnahmehülse 32 zur Aufnahme des Isolierstabes 23 auf. Die dem Kopplungsabschnitt 27 axial abgewandte Stirnseite der Aufnahmehülse 32 enthält deren Aufnahmeöffnung 33. Der Aufnahmeraum 34 der Aufnahmehülse 32 für das Isolierstabende 25 weist einen in die Aufnahmeöffnung 33 mündenden, trichterartig aufgeweiteten Einführabschnitt 35 auf. Ein derartiger Einführabschnitt 35 ermöglicht ein montagefreundliches Einführen des Isolierstabendes 25 und eines konisch verjüngten axialen Mantelendabschnittes 36 des Isoliermantels 24 in die Aufnahmehülse 32. Ist der Mantelendabschnitt 36 in den Einführabschnitt 35 eingesetzt, wird diese durch das Einsetzen gebildete Stoßstelle bei der Herstellung des Stabisolators 5 gegen Eindringen von Feuchtigkeit in den Aufnahmeraum 34 und in den Isolierstab 23 abgedichtet. Der Außendurchmesser d der Aufnahmehülse 32 entspricht dem Durchmesser der Ringrippe 30.

Der zwischen Ringrippe 30 und Aufnahmehülse 32 bestehende Axialabstand ist in Fig. 5 und Fig. 6 als Längenvariable x definiert. Das Maß dieser Längenvariable x ist je nach erforderlicher Längenanpassung des Stabisolators 5 an einen benachbarten Stabisolator 5 bzw. an eine vorbestimmte Positionierung der Verbindungsmittel 13 unterschiedlich, wenn eines der beiden Kopplungsglieder 21 in seiner hier nicht dargestellten Rohform zunächst auf das Isolierstabende 25 aufgebracht wird und die Ringrippen 30, 30', 30" durch nachträgliche Bearbeitung des Kopplungsabschnittes 27 an diesen Kopplungsabschnitt 27 eingearbeitet und dabei entsprechend dem erforderlichen Maß der Längenvariablen x axial positioniert werden. Auf diese Weise lassen sich auch fertigungsbedingte Längentoleranzen des Isolierstabes 23 und vorgefertigter Kopplungsglieder 21 ausgleichen.

In Fig. 7 ist die Formschlußverbindung zwischen dem Kopplungsglied 21 und den Verbindungsmitteln 13 erkennbar. Zwei als Verbindungsmittel 13 wirksame bzw. einen Bestandteil der Verbindungsmittel 13 bildende Klemmbacken 37,37' umfassen den Kopplungsabschnitt 27 formschlüssig. Hierbei tangieren die Innenflächen der Klemmbacken 37,37' den Umfangsmantel des Abschlußflansches 28 und den Umfangsmantel 29 des Kopplungsabschnittes 27 unmittelbar. Außerdem liegt die Ringrippe 30 formschlüssig in einer korrespondierenden Ringnut 38 der Klemmbacken 37,37' ein. Diese Formschlußverbindung erzielt eine Arretierung des Stabisolators 5 in Axialrichtung 22. Die Klemmbacken 37,37' wirken gleichzeitig als Drehlager für das Kopplungsglied 21, wenn eine Drehung des Stabisolators 5 um seine Längsachse 26 erwünscht ist. Zur Verdrehsicherung des Stabisolators 5 wird der Kopplungsabschnitt 27 zwischen den beiden Klemmbacken 37,37' mit quer zur Axialrichtung 22 wirksamer Spannkraft fest verspannt. Zu diesem Zweck durchsetzen zwei Spannschrauben 39 die beiden Klemmbacken 37, 37' in Querrichtung 11. Dabei durchsetzen die beiden Spannschrauben 39 die Klemmbacken 37, 37' außerhalb des Kopplungsabschnittes 27, wodurch nach einer Lockerung der Spannschrauben 39 eine behinderungsfreie Drehbarkeit des Kopplungsgliedes 21 gewährleistet ist. Ein vollständiges Entfernen der Spannschrauben 39 ermöglicht ein Lösen der äußeren Klemmbacke 37' von der inneren Klemmbacke 37 und somit ein Lösen der Formschlußverbindung.

Der Abschlußflansch 28 liegt im Montagezustand des Stabisolators 5 bündig in einem von den Klemmbacken 37, 37' gebildeten Leerraum 54 ein. Dieser Leerraum 54 ist in Axialrichtung 22 offen ausgebildet. Ohne die Formschlußverbindung zwischen den Klemmbacken 37, 37' und den Ringrippen 30 zu beeinträchtigen, kann der Leerraum 54 axial unterschiedlich positionierte Abschlußflansche 28 aufnehmen. Der Leerraum 54 berücksichtigt also fertigungsbedingte Abmessungstoleranzen des Abschlußflansches 28 und berücksichtigt auch die o.g. individuelle Ausgestaltung eines Kopplungsabschnittes 27 aufgrund der Anpassung des Stabisolators 5 an eine Soll-Länge.

Zur zugfesten Verbindung eines einzelnen Kopplungsgliedes 21 mit dem Fahrdrahtabschnitt 2 können abweichend von den dargestellten Ausführungsbeispielen grundsätzlich Klemmbacken verwendet werden, welche eine Formschlußverbindung mit dem Kopplungsglied 21 ermöglichen und durch eine geeignete konstruktive Ausgestaltung mit dem Fahrdrahtabschnitt 2 - unmittelbar oder mittelbar - fest verbunden sind. Die konstruktive Ausgestaltung der Klemmbacken ist dabei nicht auf die in den Figuren dargestellten Ausführungsbeispiele beschränkt. Vielmehr ist es bei der Ausgestaltung der Klemmbacken wesentlich, daß sie ganz allgemein eine in Axialrichtung 22 wirksame Formschlußverbindung mit dem Stabisolator 5 bzw. dem Kopplungsglied 21 gewährleisten.

In Fig. 7 sind zwei parallel angeordnete Kopplungsglieder 21 mit demselben Fahrdrahtabschnitt 2 fest verbunden. Hierzu sind die quer zur Axialrichtung 22 einander zugewandten inneren Klemmbacken 37 mit jeweils einer axialen Klemmenverlängerung 40,40' einstückig verbunden. Diese Klemmenverlängerungen 40,40' klemmen den Fahrdrahtabschnitt 2 zwischen sich fest ein. Zu diesem Zweck sind insgesamt drei in Axialrichtung 4 aneinandergereihte Klemmschrauben 41 vorgesehen, welche die Klemmenverlängerungen 40,40' außerhalb des Fahrdrahtabschnittes 2 in Querrichtung 11 durchsetzen. Zur Klemmung des Fahrdrahtabschnittes 2 ist an den einander zugewandten Innenflächen der Klemmenverlängerungen 40,40' jeweils ein Klemmdom 42 angeordnet, der in die bei Fahrdrähten übliche Längsnut 43 formschlüssig eingreift (siehe Fig. 9). Die der Längsnut 43 zugewandten Oberflächenbereiche der Klemmdome 42 weisen ein Relief nach Art von in Fahrdrahtlängsrichtung 4 aneinandergereihten Zähnen auf, wodurch sich eine in Fahrdrahtlängsrichtung 4 verlaufende Zahnreihe 44 ergibt. Diese Zahnreihen 44 gewährleisten im Montagezustand eine besonders wirksame reibschlüssige Verbindung zwischen den Klemmenverlängerungen 40,40' und dem Fahrdrahtabschnitt 2 in Fahrdrahtlängsrichtung 4.

In dem Bereich zwischen den Klemmenverlängerungen 40,40' und einer Spannschraube 39 weisen die inneren Klemmbacken 37 eine Montagekerbe 45 auf. Diese Montagekerben 45 sind im Montagezustand der Klemmbacken 37 im Bereich der Kontaktseite 7 angeordnet und in Richtung der Kontaktseite 7 trichterartig aufgeweitet. Die Montagekerben 45 erlauben eine Montage der Vorrichtung 1 an dem gespannten Fahrdraht und ein nachträgliches Heraustrennen des im Bereich der Stabisolatoren 5 und zwischen den Fahrdrahtabschnitten 2,3 befindlichen Fahrdrahtstückes.

Die Verbindungsmittel gem. Fig. 7 - 9 werden - wie in Fig. 3 dargestellt - über einen an der Klemmbacke 37 (welche die Klemmenverlängerung 40' enthält) angeformten und durch die Montageschraube 18 zu verschraubenden Montageausleger 46 mit dem Montagebügel 15 fest verbunden. Lediglich der Einfachheit halber ist in Fig. 7-9 der Montageausleger 46 zeichnerisch nicht dargestellt.

Der Stabisolator 5 weist aufgrund seiner Werkstoffeigenschaften und der erforderlichen Zugfestigkeit üblicherweise einen größeren Querschnitt als der Fahrdrahtabschnitt 2 auf. Die Mittellängsachse 26 ist deshalb im Montagezustand der Vorrichtung 1 gegenüber der Fahrdrahtlängsachse 55 in Höhenrichtung 8 versetzt. Dieser in Fig. 8 dargestellte Versatz 56 zwischen beiden Achsen 26,55 wird möglichst gering dimensioniert, um durch diesen Versatz 56 auf den Stabisolator 5 einwirkende Biegemomente möglichst klein zu halten.

In Fig. 10 - 12 sind zwei mit Parallelabstand zueinander angeordnete Fahrdrahtabschnitte 2 mit zwei Stabisolatoren 5 zugfest verbunden. Hierbei erfolgt die mechanische Kopplung zwischen einem einzelnen Stabisolator 5 und einem Fahrdrahtabschnitt 2 grundsätzlich wie bei der Ausführungsform gem. Fig. 7-9, nämlich mit einer äußeren Klemmbacke 37', mit einer inneren Klemmbacke 37 und daran angeformter Klemmenverlängerung 40 und mit einer inneren Klemmbacke 37 und daran angeformter Klemmenverlängerung 40' und Montageausleger 46. Diese in Querrichtung 11 gewissermaßen dreiteilige Klemme ist im Gegensatz zur zweiteiligen Klemme gemäß Fig. 7 - Fig. 9 nicht unmittelbar mit einer weiteren äußeren Klemmbacke 37' verbunden, sondern in der Mitte durch eine innere Klemmbacke 37 mit der Klemmenverlängerung 40 und durch eine innere Klemmbacke 37 mit der Klemmenverlängerung 40' und dem Montageausleger 46 ergänzt. Diese dreiteilige Klemme verbindet den zweiten Fahrdrahtabschnitt 2 mit dem zweiten Stabisolator 5. Für die mechanische Kopplung von zwei parallelen Fahrdrahtabschnitten 2 und Stabisolatoren 5 gem. Fig. 10 - Fig. 12 müssen also keine konstruktiv geänderten Klemmteile hergestellt werden. Vielmehr können die in Fig.7 - Fig.9 dargestellten Klemmteile eingesetzt werden. Lediglich die Länge der die Klemmbacken 37,37' durchsetzenden Spannschrauben 39 muß an die höhere Anzahl der aneinandergereihten Klemmbacken 37,37' angepaßt werden. Zu dieser Anpassung werden die Spannschrauben 39 teilweise durch in Querrichtung 11 längere Spannschrauben 39' ersetzt (siehe Fig. 12). Außerdem ist der Montagebügel 15' gem. Fig. 10 - Fig. 12 in Querrichtung 11 gegenüber dem Montagebügel 15 gem. Fig. 1 - Fig. 9 verlängert, um die insgesamt sechs Klemmteile 37,37' und die beiden Montageausleger 46 sowie die insgesamt vier Montageschrauben 18 aufnehmen zu können. Die beiden in Fig. 12 in Querrichtung 11 zentral angeordneten inneren Klemmbacken 37 klemmen zwischen sich ein Füllstück 47 ein, dessen Form der Form der Kopplungsabschnitte 27 entspricht. Das Füllstück 47 ist mit einem über den Montagebügel 15' hinausragenden Montagegriff 48 verbunden (siehe Fig. 10). Bedarfsweise kann das Füllstück 47 entfernt und duch einen dritten Stabisolator 5 ersetzt werden, um die Zugfestigkeit der Vorrichtung zu erhöhen.

Analog ist eine Kombination von mehr als zwei parallelen Fahrdrahtabschnitten 2 und einer entsprechend geeigneten Anzahl von Stabisolatoren 5 denkbar. Hierzu können wiederum die bei den Ausführungsformen gem. Fig. 1 - Fig. 9 eingesetzten Klemmteile bzw. Klemmbacken 37,37' eingesetzt werden, wobei lediglich eine entsprechende Anzahl von Klemmbacken vorgesehen und der Montagebügel 15 und gegebenenfalls die Spannschrauben 39 an die in Querrichtung 11 größere Länge der Klemme angepaßt werden müssen.

In Fig. 10 - Fig. 12 ist außerdem der bereits bei den Ausführungsformen gem. Fig. 1 - Fig. 9 eingesetzte Justierstift 14 gut erkennbar. In seinem den Stabisolatoren 5 in Höhenrichtung 8 zugewandten Bereich ist der Justierstift 14 mit einem Klemmsteg 49 verbunden, der gegenüber dem Justierstift 14, also gegenüber der Höhenrichtung 8, rechtwinklig abgebogen ist. Der plattenartige Klemmsteg 49 dient zur Befestigung der Kontaktkufe 12 am Montagebügel 15'. Hierzu liegt die Kontaktkufe 12 mit einem in Höhenrichtung 8 verlaufenden Kufensteg 50 planparallel am Klemmsteg 49 an. Eine mit ihrem Schraubenkopf am Kufensteg 50 anliegene Verbindungsschraube 51 wird mit einer am Klemmsteg 49 anliegenden Schraubenmutter 52 verschraubt und gewährleistet auf diese Weise eine stabile mechanische Verbindung der Kontaktkufe 12 mit dem Montagebügel 15'.

Analog zur vorbeschriebenen Verbindungstechnik zwischen der Kontaktkufe 12 und dem Montagebügel 15' wird auch in den Ausführungsformen gem. Fig. 1 - Fig. 9 mit Hilfe des Justierstiftes 14 die mechanische Verbindung zwischen der Kontaktkufe 12 und dem Montagebügel 15 hergestellt.

## Patentansprüche

1. Vorrichtung (1) zum mechanischen Verbinden und elektrischen Isolieren zweier Fahrdrahtabschnitte (2,3) einer Oberleitung, mit mindestens einem **beschleifbaren** Stabisolator (5), der im Montagezustand mit am Fahrdraht (2,3) befestigten Verbindungsmitteln (13,13',37,37') gekoppelt ist,
gekennzeichnet durch
- eine in Axialrichtung (22) des Stabisolators (5) wirksame Formschlußverbindung zwischen Stabisolator (5) und Verbindungsmittel (13,13',37,37') und
- quer zur Axialrichtung (22) verstellbare Mittel (37,37',39,39') zur lösbaren Verdrehsicherung der in Umfangsrichtung relativbeweglichen Formschlußverbindung.

2. Vorrichtung nach Anspruch 1,
dadurch gekennzeichnet,
- daß der Stabisolator (5) mindestens einen axialen Kopplungsabschnitt (27) mit mindestens einer in Umfangsrichtung verlaufenden Kopplungsnut und/oder mit mindestens einem über seinen Umfangsmantel (29) quer zur Axialrichtung (22) hinausragenden Kopplungsnocken aufweist und
- daß die Kopplungsnut und/oder der Kopplungsnocken im Montagezustand des Stabisolators (5) mit den Verbindungsmitteln (13,13',37,37') formschlüssig verbunden ist.

3. Vorrichtung nach Anspruch 2,
dadurch gekennzeichnet,
daß der Kopplungsabschnitt (27) mindestens eine über seinen Umfangsmantel (29) quer zur Mittellängsachse (26) hinausstehende und in Umfangsrichtung (29) in sich geschlossene Ringrippe (30,30',30") als Kopplungsnocken trägt und/oder mindestens eine in seinen Umfangsmantel (29) eingeformte und in Umfangsrichtung (29) in sich geschlossene Ringnut als Kopplungsnut aufweist.

4. Vorrichtung nach Anspruch 3,
dadurch gekennzeichnet,
daß der Querschnitt bzw. Durchmesser zweier axial voneinander beabstandeter und unmittelbar benachbarter Ringrippen (30,30'; 30',30") unterschiedlich ist, wobei die dem Isolatorfreiende (28) axial abgewandte Ringrippe (30';30") den größeren Querschnitt bzw. Durchmesser aufweist.

5. Vorrichtung nach Anspruch 3 oder 4,
dadurch gekennzeichnet,
daß an der dem Isolatorfreiende (28) axial zugewandten Stirnseite der Ringrippe (30,30',30") ein in Richtung des Isolatorfreiendes (28) kegelstumpfartig verjüngter Verstärkungsbereich (31,31',31") mit der Mittellängsachse (26) als Kegelachse angeformt ist.

6. Vorrichtung nach einem der Ansprüche 2 bis 5,
dadurch gekennzeichnet,
daß der Kopplungsabschnitt (27) einen axial äußeren Endabschnitt des Stabisolators (5) bildet.

7. Vorrichtung nach einem der Ansprüche 2 - 6,
dadurch gekennzeichnet,
daß der Kopplungsabschnitt (27) Bestandteil eines Kopplungsgliedes (21) ist, welches eine Aufnahmehülse (32) mit einer dem Kopplungsabschnitt (27) axial abgewandten Aufnahmeöffnung (33) zur Aufnahme des axialen Isolierstabendes (25) eines Isolierstabes (23) aufweist.

8. Vorrichtung nach Anspruch 7,
dadurch gekennzeichnet,
daß der Aufnahmeraum (34) der Aufnahmehülse (32) einen in Richtung der Aufnahmeöffnung (33) mündenden und trichterartig aufgeweiteten Einführabschnitt (35) aufweist.

9. Vorrichtung nach einem der Ansprüche 2 - 8,
dadurch gekennzeichnet,
daß sich der Kopplungsnocken, insbesondere die Ringrippe (30,30',30"), quer zur Axialrichtung (22) höchstens bis zum Außendurchmesser (d) der Aufnahmehülse (32) erstreckt.

10. Vorrichtung nach einem der vorhergehenden Ansprüche,
dadurch gekennzeichnet,
daß der Kopplungsabschnitt (27) und/oder die Aufnahmehülse (32)
- bezüglich der Mittellängsachse (26) des Stabisolators (5) rotationssymmetrisch ausgebildet ist oder
- in einer quer zur Mittellängsachse (26) des Stabisolators (5) verlaufenden Querschnittsebene polygonförmig ausgebildet ist.

11. Vorrichtung nach einem der vorhergehenden Ansprüche,
dadurch gekennzeichnet,
daß zwei als Verbindungsmittel wirksame Klemmbacken (37,37') den Stabisolator (5), insbesondere den Kopplungsabschnitt (27), im Montagezustand formschlüssig umfassen und zur Verdrehsicherung mit quer zur Axialrichtung (22) wirksamer Spannkraft zwischen sich fest verspannen.

12. Vorrichtung nach Anspruch 11,
gekennzeichnet durch
mindestens eine die Klemmbacken (37,37') außerhalb des Stabisolators (5) durchsetzende Spannschraube (39,39') zur Erzeugung der Spannkraft.

13. Vorrichtung nach Anspruch 11 oder 12,
dadurch gekennzeichnet,
- daß zwei parallel zueinander verlaufende Stabisolatoren (5) jeweils von zwei Klemmbacken (37,37') umfasst sind und
- daß die quer zur Axialrichtung (22) einander zugewandten und benachbarten inneren Klemmbacken (37) axial derart verlängert sind, daß diese Klemmenverlängerungen (40,40') als miteinander korrespondierende Klemmbacken den Fahrdraht (2,3) zwischen sich fest verspannen.

14. Vorrichtung nach Anspruch 13,
gekennzeichnet durch
mindestens eine die Klemmenverlängerungen (40,40') außerhalb des Fahrdrahtes (2,3) quer zur Fahrdrahtrichtung (4) durchsetzende Klemmschraube (41) zur Erzeugung der Spannkraft.

15. Vorrichtung nach Anspruch 13 oder 14,
dadurch gekennzeichnet,
daß die beiden Klemmenverlängerungen (40, 40') in Axialrichtung (22) relativ zueinander verstellbar sind.

16. Vorrichtung nach einem der vorhergehenden Ansprüche,
dadurch gekennzeichnet,
- daß der Fahrdrahtabschnitt (2,3) und der axial äußere Isolatorabschnitt von zwei mit dem Fahrdrahtabschnitt (2,3) galvanisch verbundenen Kontaktkufen (12) flankiert ist und
- daß der von einem Stromabnehmer elektrisch zu kontaktierende und eine Kontaktseite (7) bildende Oberflächenbereich des Fahrdrahtabschnittes (2,3) und ein Oberflächenbereich zumindest des axial mittleren Isolatorabschnittes (53) des Stabisolators (5) in einer Ebene einliegen.

## Claims

1. Apparatus (1) for mechanical connection and electrical isolation of two contact-wire sections (2, 3) of an overhead line, having at least one bar-type insulator (5), **over which it is possible to slide,** and which, when fitted, is coupled to connecting means (13, 13', 37, 37') attached to the contact wire (2, 3),
characterized by
- a positive-locking connection, which acts in the axial direction (22) of the bar-type insulator (5), between the bar-type insulator (5) and the connecting means (13, 13', 37, 37') and
- means (37, 37', 39, 39'), which can be moved transversely with respect to the axial direction (22), for detachable rotation protection for the positive-locking connection, which moves relatively in the circumferential direction.

2. Apparatus according to Claim 1,
characterized
- in that the bar-type insulator (5) has at least one axial coupling section (27) having at least one coupling groove running in the circumferential direction, and/or having at least one coupling stud which projects beyond the circumferential casing (29) of said section, transversely with respect to the axial direction (22), and
- in that the coupling groove and/or the coupling stud are/is connected in a positively locking manner to the connecting means (13, 13', 37, 37') when the bar-type insulator (5) is fitted.

3. Apparatus according to Claim 2,
characterized in that the coupling section (27) is fitted with at least one annular rib (30, 30', 30") as the coupling stud, which projects beyond the circumferential casing (29) of said section, transversely with respect to the central longitudinal axis (26) and is intrinsically closed in the circumferential direction (29), and/or has at least one annular groove as the coupling groove, which is formed in the circumferential casing (29) of said section and is intrinsically closed in the circumferential direction (29) .

4. Apparatus according to Claim 3,
characterized in that the cross section or diameter of two annular ribs (30, 30'; 30', 30") which are axially at a distance from one another and are immediately adjacent differs, with the annular rib (30'; 30") which faces axially away from the free end (28) of the insulator having the larger cross section or diameter.

5. Apparatus according to Claim 3 or 4,
characterized in that a reinforcement region (31, 31', 31") which tapers in the form of a truncated cone in the direction of the free end (28) of the insulator and whose cone axis is the central longitudinal axis (26) is integrally formed on that end face of the annular rib (30, 30', 30") which faces the free end (28) of the insulator axially.

6. Apparatus according to one of Claims 2 to 5,
characterized in that the coupling section (27) forms an axially outer end section of the bar-type insulator (5).

7. Apparatus according to one of Claims 2-6,
characterized in that the coupling section (27) is a component of a coupling member (21), which has a holding sleeve (32) with a holding opening (33), which faces axially away from the coupling section (27), in order to hold the axial insulating bar end (25) of an insulating bar (23).

8. Apparatus according to Claim 7, characterized in that the holding space (34) in the holding sleeve (32) has an insertion section (35) which opens in the direction of the holding opening (33) and widens like a funnel.

9. Apparatus according to one of Claims 2-8, characterized in that the coupling stud, in particular the annular rib (30, 30', 30"), extends at most as far as the external diameter (d) of the holding sleeve (32) transversely with respect to the axial direction (22).

10. Apparatus according to one of the preceding claims, characterized in that the coupling section (27) and/or the holding sleeve (32)
- are/is formed to be rotationally symmetrical with respect to the central longitudinal axis (26) of the bar-type insulator (5), or
- are/is designed to be polygonal in a cross-sectional plane running transversely with respect to the central longitudinal axis (26) of the bar-type insulator (5).

11. Apparatus according to one of the preceding claims, characterized in that two clamping jaws (37, 37'), which act as connecting means, grip the bar-type insulator (5), in particular the coupling section (27), in a positively locking manner when fitted, and hold it firmly between them, for rotation protection, with a tension force acting transversely with respect to the axial direction (22).

12. Apparatus according to Claim 11,
characterized by
at least one tensioning screw (39, 39'), which passes through the clamping jaws (37, 37') outside the bar-type insulator (5), in order to produce the tension force.

13. Apparatus according to Claim 11 or 12,
characterized
- in that two bar-type insulators (5) which run parallel to one another are each gripped by two clamping jaws (37, 37'), and
- in that the adjacent, inner clamping jaws (37), which face one another transversely with respect to the axial direction (22), are lengthened axially in such a manner that these clamp extensions (40, 40') hold the contact wire (2, 3) firmly between them, as mutually corresponding clamping jaws.

14. Apparatus according to Claim 13,
characterized by
at least one clamping screw (41), which passes through the clamp extensions (40, 40') outside the contact wire (2, 3) transversely with respect to the contact-wire direction (4), in order to produce the tension force.

15. Apparatus according to Claim 13 or 14,
characterized in that the two clamp extensions (40, 40') can be moved relative to one another in the axial direction (22).

16. Apparatus according to one of the preceding claims, characterized
- in that the contact-wire section (2, 3) and the axially outer insulator section are flanked by two contact skids (12) which are directly electrically connected to the contact-wire section (2, 3), and
- in that the surface region of the contact-wire section (2, 3) which is intended to make electrical contact with a current collector and forms a contact face (7), and a surface region of at least the axially central insulator section (53) of the bar-type insulator (5) lie in a plane.

## Revendications

1. Dispositif (1) pour relier mécaniquement et isoler électriquement deux éléments de fils (2,3) d'une caténaire, comportant un isolateur tige (5), sur lequel un déplacement avec glissement peut être exécuté en boucle et qui, à l'état monté, est couplé à des moyens de liaison (13,13',37,37') fixés au fil de caténaire (2,3),
caractérisé par
- une liaison par formes complémentaire, agissant dans la direction axiale (22) de l'isolateur tige (5), entre l'isolateur tige (5) et les moyens de liaison (13,13',37, 37'), et
- des moyens (37,37',39,39') réglables transversalement par rapport à la direction axiale (22) et servant à réaliser un blocage amovible en rotation du système de liaison par formes complémentaires déplaçable de façon relative dans la direction circonférentielle.

2. Dispositif selon la revendication 1, caractérisé en ce
- que l'isolateur tige (5) comporte au moins une partie axiale de couplage (27) comportant au moins une rainure de couplage qui s'étend dans la direction circonférentielle et/ou au moins une came de couplage qui fait saillie au-dessus de la surface enveloppe (22) de la partie de couplage transversalement par rapport à la direction axiale (22), et
- que, lorsque l'isolateur tige (5) est à l'état monté, la rainure de couplage et/ou la came de couplage sont reliées selon une liaison par formes complémentaires aux moyens de liaison (13,13',37,37').

3. Dispositif selon la revendication 2, caractérisé en ce
que la partie de couplage (27) porte, en tant que came de couplage, au moins une nervure annulaire (30,30',30"), qui fait saillie sur la surface enveloppe (29) de la partie de couplage, transversalement par rapport à l'axe médian longitudinal (26) et est fermée sur elle-même dans la direction circonférentielle (29), et/ou, en tant que rainure de couplage, au moins une gorge annulaire qui est formée dans son enveloppe circonférentielle (29) ou est fermée sur elle-même dans la direction circonférentielle (29).

4. Dispositif selon la revendication 3, caractérisé en ce
que la section transversale ou le diamètre de deux nervures annulaires (30,30';30',30") distantes axialement l'une de l'autre et directement voisine est différent, la nervure annulaire (30';30"), qui est située axialement à l'opposé de l'extrémité libre (28) de l'isolateur, possédant la section transversale maximale ou le diamètre maximum.

5. Dispositif selon la revendication 3 ou 4, caractérisé en ce
que sur la face frontale de la nervure annulaire (30,30', 30"), qui est tournée axialement à l'opposé de l'extrémité libre (28) de l'isolateur, est formée une partie de renfort (31,31',31"), qui se rétrécit avec une forme tronconique en direction de l'extrémité libre (28) de l'isolateur, avec comme axe du cône l'axe médian longitudinal (26).

6. Dispositif selon l'une des revendications 2 à 5, caractérisé en ce
que la partie de couplage (27) forme une partie d'extrémité extérieure, du point de vue axial, de l'isolateur tige (5).

7. Dispositif selon l'une des revendications 2 à 6, caractérisé en ce
que la partie de couplage (27) fait partie d'un organe de couplage (21), qui comporte une douille de réception (32) pourvu d'une ouverture de réception (33) tournée axialement à l'opposé de la partie de couplage (27) et servant à loger l'extrémité axiale (25) d'une tige d'isolation (23).

8. Dispositif selon la revendication 7, caractérisé en ce
que l'espace de réception (34) de la douille de réception (32) possède une partie d'introduction, qui débouche dans la direction de l'ouverture de réception (33) et s'élargit avec une forme d'entonnoir.

9. Dispositif selon la revendication 2-8, caractérisé en ce
que la came de couplage, notamment la nervure annulaire (30,30',30"), s'étend transversalement par rapport à la direction axiale (22) au maximum jusqu'à la circonférence de diamètre extérieur (d) de la douille de réception (32).

10. Dispositif selon l'une des revendications précédentes, caractérisé en ce
que la partie de couplage (27) et/ou la douille de réception (32)
- sont formées avec une symétrie de révolution par rapport à l'axe médian longitudinal (28) de l'isolateur tige (5), ou
- sont agencées avec une forme polygonale dans un plan de coupe transversale qui s'étend perpendiculairement à l'axe médian longitudinal (26) de l'isolateur tige (5).

11. Dispositif selon l'une des revendications précédentes, caractérisé en ce
que deux mâchoires de serrage (37,37'), qui agissent en tant que moyens de liaison, enserrent l'isolateur tige (5), notamment la partie de couplage (27), selon une liaison par formes complémentaires à l'état monté et serrent entre elles l'isolateur pour réaliser un blocage en rotation, avec une force de serrage agissant transversalement par rapport à la direction axiale (22).

12. Dispositif selon la revendication 11, caractérisé par
au moins une vis de serrage (39,39') qui traverse les mâchoires de serrage (37,37') à l'extérieur de l'isolateur tige (5) et servent à produire la force de serrage.

13. Dispositif selon la revendication 11 ou 12, caractérisé en ce
- que deux isolateurs tiges (5) parallèles entre eux sont enserrés respectivement par deux mâchoires de serrage (37,37'), et
- que les mâchoires de serrage intérieures voisines (37), qui sont tournées l'une vers l'autre transversalement par rapport à la direction axiale (22), sont prolongées axialement de telle sorte que ces prolongements formant pinces (40,40') agissant en tant que mâchoires de serrage, qui se correspondent, serrent entre eux fermement le fil de caténaire (2,3).

14. Dispositif selon la revendication 13, caractérisé par
au moins une vis de serrage (41) qui traverse les prolongements formant pinces (40,40') à l'extérieur du fil de caténaire (2,3), transversalement par rapport à la direction (4) du fil de caténaire, pour produire la force de serrage.

15. Dispositif selon la revendication 13 ou 14, caractérisé en ce
que les deux prolongements formant pinces (40,40') sont réglables l'un par rapport à l'autre dans la direction axiale (22).

16. Dispositif selon l'une des revendications précédentes, caractérisé en ce
- que la partie (2,3) du fil de caténaire et la partie extérieure du point de vue axial de l'isolateur sont flanquées de deux patins de contact (12), qui sont reliés galvaniquement à la partie (2,3) du fil de caténaire, et
- que l'élément de surface de la partie (2,3) du fil de caténaire, avec lequel un pantographe doit établir un contact électrique et qui forme un côté de contact (7), et un élément de surface au moins de la partie (53), centrale du point de vue axial, de l'isolateur tige (5) sont situées dans un plan.
